Europäisches Patentamt

European Patent Office

Office européen des brevets

(19)

(11) EP 1 345 238 A2

(12) EUROPEAN PATENT APPLICATION

(43) Date of publication:
17.09.2003 Bulletin 2003/38

(51) Int Cl.$^7$: G21B 1/00, G21B 1/02

(21) Application number: 03251489.5

(22) Date of filing: 12.03.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 12.03.2002 JP 2002067220

(71) Applicants:
• IKEGAMI, Hidetsugu
Takarazuka-shi, Hyogo 665 (JP)

• Ikegami, Sayaka
Takarazuka-shi, Hyogo (JP)

(72) Inventor: Ikegami, Hidetsugu
Takarazuka-shi, Hyogo (JP)

(74) Representative: Dealtry, Brian
Eric Potter Clarkson,
Park View House,
58 The Ropewalk
Nottingham NG1 5DD (GB)

(54) Method of and appartaus for generating recoilless nonthermal nuclear fusion

(57) A method of and apparatus for generating re-coilless nonthermal nuclear fusion reaction, wherein deuterium ions accelerated by pulsed gas discharge plasma are implanted onto a surface of an electrode (2) formed of liquid lithium (9), and the momentum to be transferred to the lithium atoms coming into collision with the deuterium atoms is carried out by neutrons, so that the lithium atoms are prevented from being recoiled, and the recoilless nonthermal nuclear fusion reaction is enhanced without reducing a cohesion acting between atoms in the liquid lithium (9).

FIG. 1

HEAVY HYDROGEN INJECTION DEVICE

HELIUM COLLECTOR

ELECTRIC PULSE POWER SUPPLY

HEAT UTILIZATION SYSTEM

LITHIUM MEASURING AND PURIFYING SYSTEM

EP 1 345 238 A2

## Description

The present invention relates to a method of and apparatus for generating recoilless nonthermal nuclear fusion, and more particularly, relates to a method of and apparatus for generating recoilless nonthermal nuclear fusion by using mainly a liquid metal lithium as a nuclear fuel and a catalytic solvent.

Hitherto, no ion / electron plasma of higher density usable practically for the nuclear fusion reaction has been obtained. Inventions shown in the Japanese Patent Application Laid-Open No.207092/2002 ( Method of generating molten lithium nuclear fusion reaction and apparatus for supplying nuclear fusion energy ), Japanese Patent Application Nos. 177670/2001 ( Method of and apparatus for generating nuclear fusion electric energy ), 216026/2001 ( Method of and apparatus for generating nonthermal nuclear fusion electric energy ), 258233/2001 (Apparatus for nuclear fusion reaction ), and 258234/2001 ( Method of generating molten lithium nuclear fusion reaction and apparatus for generating molten lithium nuclear fusion energy ) have been proposed by the inventor of this patent application. Each of such inventions discloses the fact that the ion / electron plasma of high density can be obtained by the conventional device and that the energy supply device using the ion / electron plasma can be obtained.

Each of said inventions, however, has following problems in the practical use.

In each of said inventions, the nuclear reaction rate is enhanced by about $10^{13}$ times by the cohesion acting between atoms in the liquid lithium when hydrogen ions in the buffer energy region of 1 keV~25 keV per nucleon is implanted into the liquid lithium. However, the cohesion acting on the lithium atoms is disappeared substantially, because the lithium atoms impinged on the hydrogen ions are recoiled, so that the enhancement effect is reduced by about $10^4$ times and the utility thereof may be lost.

An object of the present invention is to provide a method of and apparatus for generating recoilless nonthermal nuclear fusion which are practically usable, wherein the lithium atoms are not recoiled and the nuclear fusion reaction with the hydrogen atoms is generated.

Another object of the present invention is to provide a method of generating recoilless nonthermal nuclear fusion characterized in that high density liquid ion / electron plasma is produced by implanting deuterium ions accelerated by pulsed gas discharge plasma onto a surface of an electrode formed of nuclear fusion fuel mixed with liquid lithium or nuclear fusion materials fusible into the liquid lithium, and recoilless nonthermal nuclear fusion reaction is enhanced by a cohesion acting between atoms in the liquid lithium.

A further object of the present invention is to provide an apparatus for generating recoilless nonthermal nuclear fusion energy comprising a reaction container for producing deuterium ions by introducing therein deuterium gas, an anode arranged in the reaction container, a cathode formed of nuclear fusion fuel mixed with liquid lithium or nuclear fusion materials fusible into the liquid lithium and arranged in the reaction container so as to separate a predetermined distance from the anode, and an electric pulse power supply for applying electric voltage pulses between the anode and the cathode and producing liquid ion / electron plasma in the reaction container, wherein recoilless nonthermal nuclear fusion reaction is enhanced withoud reducing a cohesion acting between atoms in the liquid lithium.

The cathode is arranged vertically and formed of perforated metal or conductive ceramic plates and metal meshes superposed to each other, the perforated plates being impregnated or circulated by the capillarity with nuclear fusion fuel.

The apparatus for generating recoilless nonthermal nuclear fusion energy according to the present invention further comprises cooling means and heat insulating means surrounding both of the anode and the cathode, and means for utilizing heat obtained from the cooling means.

The apparatus for generating recoilless nonthermal nuclear fusion energy according to the present invention comprises a high temperature source loop having a circulating pump and a pipe for taking out of heat generated by the nuclear fusion reaction from a coolant or liquid lithium, and mean for separating and collecting deuterium, vapor lithium and produced helium; a low temperature source loop having pipes, a circulating pump and a cooler; and a thermoelectric energy generating system having a thermoelectric converter connected to external load for taking out of an electric power by inserting thermoelectric transducer materials between the high temperature source loop and the low temperature source.

The apparatus generating recoilless nonthermal nuclear fusion energy according to the present invention further comprises a heat exchanger provided between a liquid lithium system and a water / vapor system in order to utilize heat from the high temperature source loop for driving a turbine.

The apparatus for generating recoilless nonthermal nuclear fusion energy according to the present invention further comprises an independent heat transfer system inserted between liquid lithium system and the water / vapor system in order to utilize heat from the high temperature source loop for driving a turbine.

In the present invention, the following nuclear stripping reaction of deuterium ion d of buffer energy shown in a reaction equation (1) is utilized in the course of the energy generation.

$$^{7}\text{Li} + \text{d} \rightarrow 2\,^{4}\text{He} + \text{n} + 15.1\,\text{MeV} \qquad (1)$$

Here, n is neutron, and MeV is megaelectron volt.

The reaction energy in the right side of the equation (1) is ejected as a radiation energy and a kinetic energy of the product nuclei.

The equation (1) shows the fact that two helium atoms ( $2^4$ He ) in the right side thereof are produced by the nuclear stripping reaction wherein proton is captured and neutron n is ejected according to the interaction of one atom of deuterium $^2$H and one atom of $^7$Li which is a kind of isotope of lithium in the left side of the equation (1). In this reaction, nuclear fusion reaction wherein proton is captured is generated in the stationary state without recoiling of $^7$Li when middle speed neutrons n of which energy is about twice of deuterium is ejected. Accordingly, the nuclear reaction is enhanced due to the cohesion between atoms without reducing the cohesion according to the recoil.

The generated middle speed neutrons are absorbed by $^6$Li and $^7$Li in reactions shown in following reaction equations (2) and (3) and $\gamma$ ray energy is emitted. A produced $^6$Li nucleus is transmuted to beryllium $^8$Be$^*$ of excitation energy of 0.4 MeV at $\beta^-$ decay of which half life is 0.84 second as shown in a reaction equation (4), and is emitted by instantaneous $\alpha$ decay together with $\beta$ ray energy. However, antineutrino $\bar{\nu}$ emission energy in the reaction equation (4) cannot be taken out as a usable energy.

$$^6\text{Li} + \text{n} \rightarrow {}^7\text{Li} + \gamma + 7.25 \text{ MeV} \qquad (2)$$

$$^7\text{Li} + \text{n} \rightarrow {}^8\text{Li} + \gamma + 2.03 \text{ MeV} \qquad (3)$$

$$^8\text{Li} \rightarrow {}^6\text{Be*} + \beta^- + \bar{\nu} + 12.87 \text{ MeV} \qquad (4)$$

$$^8\text{Be}^* \rightarrow 2 \, {}^4\text{He} + 3.13 \text{ MeV} \qquad (5)$$

An energy of about 27 MeV can be taken out by two atoms of $^7$Li and one atom of $^2$H, even if the energy of antineutrino $\bar{\nu}$ is subtructed in the reactions shown in the reaction equations (1), (3), (4) and (5).

It is possible to control easily the generation of the energy, because the reaction is finished immediately by the stop of the irradiation of the deuterium ion, and to provide an energy source which is easy in handle and not limited in the utility, because no energy is ejected when it is not used.

According to the present invention, deuterium ion pulses are irradiated onto a surface of the cathode formed of nuclear fusion fuel mixed with liquid lithium or nuclear fusion materials fusible into the liquid lithium, so as to induce nonthermal nuclear fusion reaction. In this reaction, an energy is generated according to the reaction equations (1) ~ (5) and utilized.

The deuterium ions are accelerated to an energy of 1-50 keV of so called buffer, energy region by applying a controlled high electric voltage pulses between the cathode and the anode and generating the pulse discharging. In the nuclear fusion reaction, the liquid lithium is heated rapidly, however, it is possible to control the unstable phenomenon if the application of the high electric voltage is stopped before the liquid lithium becomes unstable. This control method includes the increase or decrease in width and the change in frequency of the high electric voltage pulses.

Further, according to the present invention, the cathode is formed of perforated metal or conductive ceramic plates and metal meshes superposed to each other, the perforated plates being impregnated or circulated by the capillarity with liquid lithium, in order to prevent the unstable state due to the local heating of the liquid lithium, so that the liquid lithium is prevented from being scattered by the cohesion of the liquid metal and the heat transmission of the perforated metal, and it is possible to arrange the cathode vertically.

According to the present invention, cooling means surrounding both of the anode and the cathode is provided, and means for utilizing heat obtained from the cooling means is used, so that the heat energy can be used effectively.

According to the present invention, a thermoelectric energy generating system is composed of a high temperature source loop having a circulating pump and a pipe for taking out of heat generated by the nuclear fusion reaction from a coolant or liquid lithium; a low temperature source loop having pipes, a circulating pump and a cooler; and a thermoelectric converter connected to external load for taking out of an electric power by inserting thermoelectric transducer materials between the high temperature source loop and the low temperature source loop, so that the heat energy can be converted directly to the electric energy.

Further, according to the present invention, a heat exchanger is provided in order to connect directly a water / vapor system for driving a turbine and a high temperature source loop for taking out of heat generated by the nuclear fusion reaction from a coolant or liquid lithium, or independent intermediate cooling loop is inserted between the heat exchanger and the water / vapor system, in order to maintain the cooling system safely and realize a large scale electric power system.

These and other aspects and objects of the present invention will be better appreciated and understood when considered in conjunction with the following description and the accompanying drawings. It should be understood, however, that the following description, while indicating preferred embodiments of the present invention, is given by way of illustration and not of limitation. Many changes and modifications may be made within the scope of the present invention without departing from the spirit thereof, and the invention includes all such modifications.

FIG. 1 is a vertically sectioned front view of an apparatus for generating recoilless nonthermal nuclear fusion energy of a first embodiment according to the present invention;
FIG. 2 is a front view of a cathode of the apparatus shown in FIG. 1;
FIG. 3 is a horizontally sectioned plan view of the cathode shown in FIG. 2;
FIG. 4 is an apparatus for generating recoilless nonthermal nuclear fusion energy of a second embodiment according to the present invention;
FIG. 5 is a schematic view of a heat utilization system of a first embodiment according to the present invention; and
FIG. 6 is a schematic view of a heat utilization system of a second embodiment according to the present invention.

Embodiment of a method of and apparatus for generating recoilless nonthermal nuclear fusion of the present invention will now be explained with reference to the drawings.

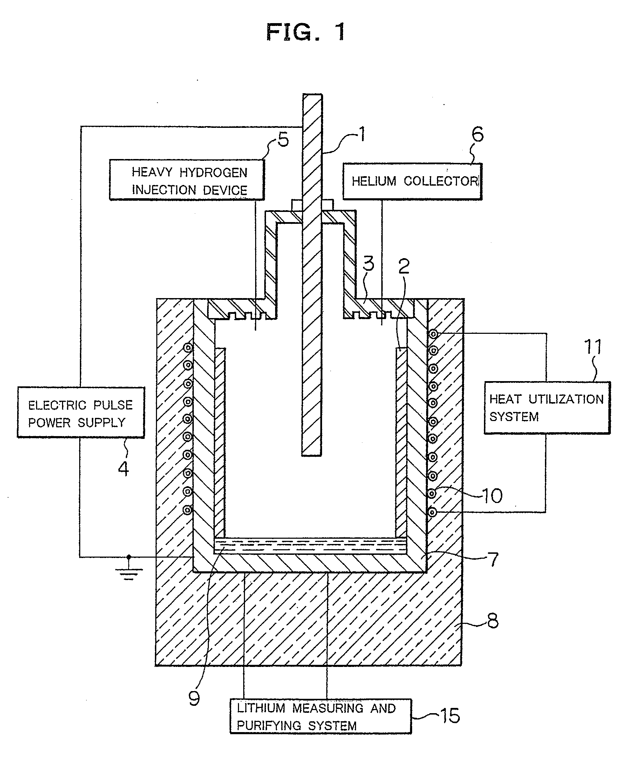

As shown in FIG. 1, an apparatus for generating recoilless nonthermal nuclear fusion energy of a first embodiment according to the present invention comprises a cylindrical reaction container 7 having a bottom plate and an upper insulating plate 3 with a cylindrical portion for closing an opening of the reaction container 7. The reaction container 7 is connected to a vacuum exhaust device ( not shown ). An anode 1 of rod shape, a cylindrical cathode 2, liquid lithium 9 and deuterium gas etc. are inserted into the reaction container 7. Boron may be added as a nuclear fusion material.

The cathode 2 is mounted on an inner peripheral surface of the reaction container 7. The anode 1 is movable up and down through the insulating plate 3 having the cylindrical portion. The liquid lithium 9 is introduced into the reaction container 7 from a lithium supply system ( not shown ), and the introduced liquid lithium 9 is brought into contact with a lower end portion of the cathode 2.

A heat exchanging system 10 is arranged at an outer peripheral surface of the reaction container 7. The heat exchanging system 10 and the reaction container 7 are covered with a heat insulating material 8. The liquid lithium 9 in the reaction container 7 is contacted directly with the heat exchanging system 10 in case that the liquid lithium 9 is used as a coolant. Heat obtained by the heat exchanging system 10 is supplied to a heat utilization system 11. The cathode 2 and the anode 1 are connected electrically by an electric pulse power supply 4.

Deuterium is injected through the insulating plate 3 into the reaction container 7 by a deuterium injection device 5 arranged at the outside of the reaction container 7.

A helium ( He ) in the reaction container 7 can be collected through the insulating plate 3 by a helium collector 6 arranged at the outside of the reaction container 7. A lithium measuring and purifying system 15 is mounted on the reaction container 7 so as to monitor the state of the liquid lithium 9 in the reaction container 7.

According to the apparatus of the present invention, the liquid lithium 9 sinks into the cathode 2 or circulated forcedly by the capillarity, because the cathode 2 is in contact with the liquid lithium 9 at the bottom portion of the reaction container 7.

A buffer energy nuclear fusion reaction is generated and the energy can be obtained easily by the heat exchanging system 10 and the heat utilization system 11, when pulse discharging is carried out by the deuterium gas supplied by the deuterium injection device 5, so that energy can be taken out easily by the heat exchanging system 10 and the heat utilization system 11. In this state, the state of the liquid lithium 9 is monitored by the lithium measuring and purifying system 15, so that the long stable operation can be maintained. Further, helium etc. produced by the nuclear fusion reaction is exhausted to the outside by the helium collector 6.

In the above embodiment, it is possible to increase the efficiency, because the reaction area is increased by using the cylindrical cathode 2 and the heat exchanging system 10 arranged at the outer peripheral surface of the reaction container 7. Further, the nuclear fusion reaction can be carried out smoothly by removing contaminants included in the liquid lithium 9 and measuring the temperature etc. of the liquid lithium 9 by the lithium measuring and purifying system 15. The reaction container 7 can be arranged vertically as shown in FIG. 1.

Furthermore, it is possible to prolong the discharging length and to apply a higher electric voltage in the deuterium discharge state, because the anode 1 is arranged movably up and down in the axial direction of the reaction container 7. As a result, an optimum energy according to the object can be obtained, so that an energy source which can be utilized without any limitation and handled easily and stably can be provided.

In case of the general pulse discharging, an ion energy of about 1 ~ 10 keV can be obtained, if an electric field V between the electrodes is selected in the range of

$$0.01 \text{ kV/cm} \leqq V \leqq 1000 \text{ kV/cm},$$

and a product of a discharge length ( effective gap between the electrodes ) L and a gas pressure p is selected in the range of

$$10^{-3} \text{ torr} \cdot \text{cm} \leqq pL \leqq 10^{-4} \text{ torr} \cdot \text{cm}.$$

Deuterium ions are accelerated by the electric field between the anode 1 and the cathode 2 including the liquid lithium 9, so that a current of the deuterium ions is formed. The current of the deuterium ions reaches the surface of the cathode 2 including the liquid lithium 9, so that the buffer energy nuclear fusion reactions of the equations (1) and (2), and a series of nuclear transmutations of the equations (3) - (5) to be induced by the buffer energy nuclear fusion reactions are generated.

The liquid lithium is heated rapidly by the energy thus generated. The energy is transmitted rapidly to the heat exchanging system 10 by the heat transmitting effect of the porous metal or the electrically conductive ceramics etc. forming the cathode.

The transmitted energy is utilized to generate an electric power or as the area conditioning by the heat energy utilization system 11.

It is possible to enhance the heat efficiency by covering the reaction container 7 surrounding the cathode 2 to be heated with the heat insulating material 8. It is also possible to stop temporarily the electric discharging and the current of the deuterium ions, so as to control easily and safely the generated energy.

According to the embodiment of the present invention, an optimum energy for the object can be obtained, so that an energy source which can be utilized without any limitation and handled easily and stably can be provided.

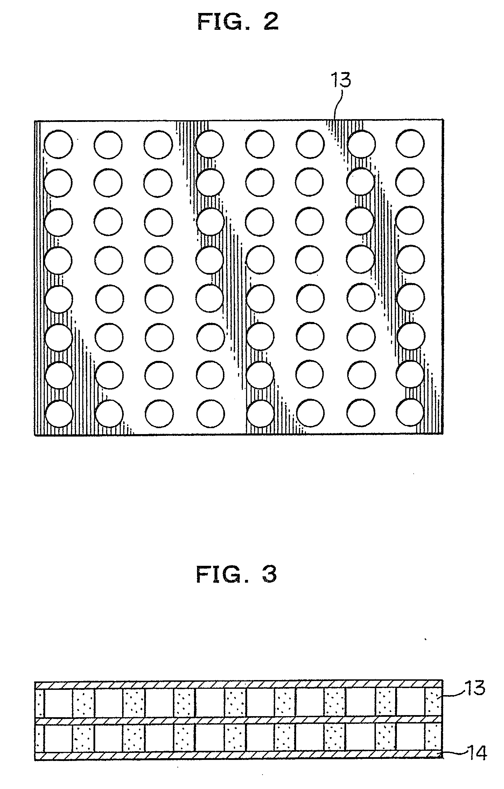

FIG. 2 and FIG. 3 show the cathode 2 comprising heat transmissible perforated plates 13 and metal nets 14 superposed to each other. Even if heat is generated locally, the heat is diffused by the heat transmitting effect of the perforated plate 13, because the holes of the perforated plate 13 are filled with the liquid lithium 9 as stated above. Further, the liquid lithium 9 is prevented from being scattered by the metal net 14 and the cohesion of the liquid lithium. The perforated plate 13 may be reinforced in strength by the metal net 14.

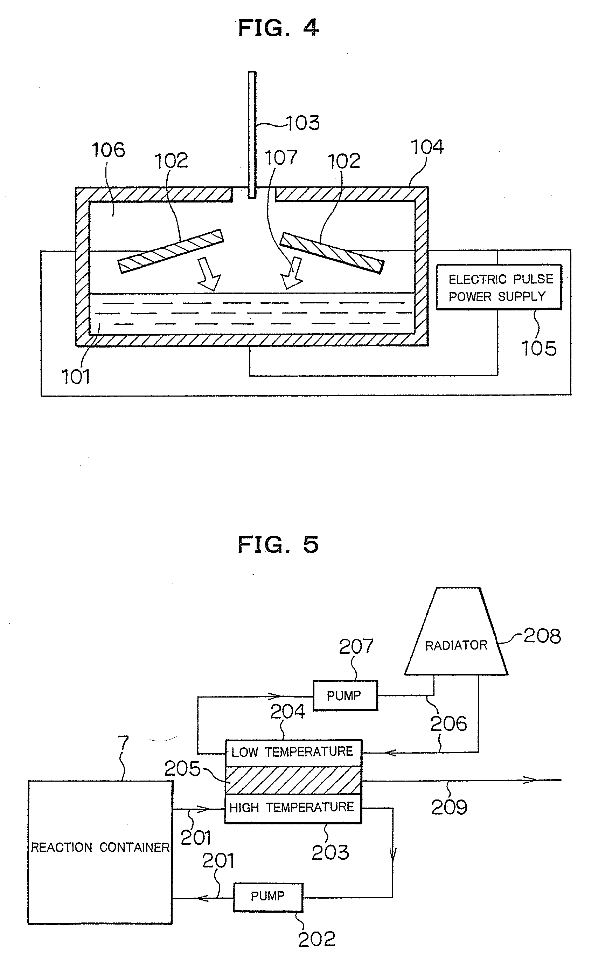

FIG. 4 shows a horizontal type recoilless nonthermal nuclear fusion energy generating apparatus.

In FIG. 4, reference numeral 101 denotes a cathode or liquid lithium electrode, 102 denotes anodes, 103 denotes a deuterium supply pipe, 104 denotes a container, and 105 denotes an energy supply device composed of an electric pulse power supply. Deuterium gas 106 is ionized by the energy supply device 105. Deuterium ions 107 is accelerated by the electric field and implanted into the liquid lithium electrode 101.

According to this embodiment, a high density ion / electron plasma is produced on the surface of the liquid lithium, so that the nuclear fusion reaction is enhanced by the cohesion acting between atoms in the liquid lithium. The liquid lithium stored in the container 104 is converted finally into helium by the nuclear fusion reaction and the nuclear transmutation associated with the nuclear fusion reaction.

FIG. 5 shows a flow sheet of a thermoelectric energy generating system forming a primary circulating loop. In the primary circulating loop, a liquid lithium coolant in the reaction container 7 of the apparatus for generating nuclear fusion reaction is heated by the nuclear fusion reaction, and introduced through a pipe 201 into a high temperature portion 203 of a thermoelement transducer 205 to heat the high temperature portion 203, and then returned to the reaction container 7 by a circulating pump 202.

A secondary heat removing loop for cooling a low temperature portion 204 of the thermoelement transducer 205 is composed of pipes 206, a circulating pump 207 and a heat radiating device 208. The thermoelement transducer 205 is contacted intimately with the high temperature portion 203 and the low temperature portion 204, so that an electric energy is generated by the temperature difference between the high temperature portion 203 and the low temperature portion 204. Specifically, the heat energy is converted directly into the electric energy. The electric energy thus obtained is supplied to a load through a cable 209.

According to the embodiment shown in FIG. 5, an electric energy generating system simple in construction can be realized, and a nuclear fusion energy supply device low in cost and high in reliability can be provided.

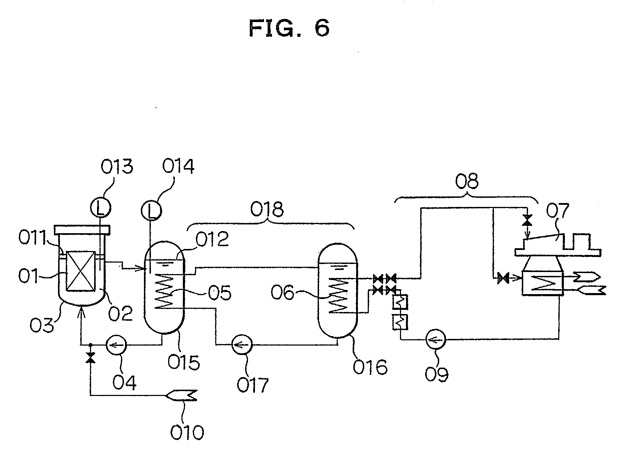

FIG. 6 shows a second embodiment of the heat utilization system comprising a liquid lithium system 02, a water / vapor system 08, and an intermediate cooling system 018, wherein a turbine 07 is driven by heat due to the nuclear fusion. A heat exchanger of shell and tube system, for example, is used as a heat exchanging pipe 05 of an intermediate heat exchanger 015 inserted between the liquid lithium system 02 and the water / vapor system 08.

The intermediate cooling system 018 uses liquid metal or electrically conductive molten salt as a fluid, and receives heat from the liquid lithium system 02 through the intermediate heat exchanger 015. The heat is transmitted to the water / vapor system 08 through a vapor generating device 016.

If the intermediate cooling system 018 is not provided and the heat exchanging pipe 05 in the heat exchanger 015 is damaged, the liquid lithium reacts violently with water, so that reaction products may be entered into a reactor core 01. However, according to the second embodiment of the present invention, the additional system is provided between the water / vapor system 08 and the liquid lithium system 02, so that it is prevented the reaction products from being entered into the reaction core 01, even if a heat exchanging pipe 06 in the vapor generating device 016 is damaged.

Further, in FIG. 6, reference numeral 03 denotes a reaction container, 04 denotes a circulating pump, 06 denotes a heat exchanging pipe, 010 denotes a liquid lithium supply device, 011 and 012 denote liquid levels, and 013 and 014 denote means for separating and collecting deuterium, vapor lithium and produced helium.

As stated above, according to the present invention, the recoilless nonthermal nuclear fusion reaction is introduced, so that the nuclear fusion reaction enhancement effect due to the cohesion acting between atoms in the liquid lithium can be obtained fully, the electric discharging becomes stably, the liquid lithium can be prevented from being scattered and the energy can be supplied stably and safely, and accordingly a method of and apparatus for generating recoilless nonthermal nuclear fusion which may be handled easily can be obtained.

While this invention has been described with specific embodiments thereof, it is evident that many alternatives, modifications, and variations will be apparent to those skilled in the art. Accordingly, the preferred embodiments of the invention as set forth herein are intended to be illustrative, not limiting. Various changes may be made without departing from the spirit and scope of the invention.

**Claims**

1.  A method of generating recoilless nonthermal nuclear fusion reaction **characterized in that** high density liquid ion / electron plasma is produced by implanting deuterium ions accelerated by pulsed gas discharge plasma onto a surface of an electrode (2) formed of nuclear fusion fuel mixed with liquid lithium (9) or nuclear fusion materials fusible into the liquid lithium (9), and recoilless nonthermal nuclear fusion reaction is enhanced by a cohesion acting between atoms in the liquid lithium (9).

2.  An apparatus for generating recoilless nonthermal nuclear fusion energy **characterized by** comprising a reaction container (7) for producing deuterium ions by introducing therein deuterium gas, an anode (1) arranged in the reaction container (7), a cathode (2) formed of nuclear fusion fuel mixed with liquid lithium (9) or nuclear fusion materials fusible into the liquid lithium (9) and arranged in the reaction container (7) so as to separate a predetermined distance from the anode (1), and an electric pulse power supply (4) for applying electric voltage pulses between the anode (1) and the cathode (2) and producing liquid ion / electron plasma in the reaction container (7), wherein recoilless nonthermal nuclear fusion reaction is enhanced by a cohesion acting between atoms in the liquid lithium (9).

3.  The apparatus for generating recoilless nonthermal nuclear fusion energy as claimed in claim 2, wherein the cathode (2) is arranged vertically and formed of perforated metal or conductive ceramic plates (13) and metal meshes (14) superposed to each other, the perforated plates (13) being impregnated or circulated by the capillarity with nuclear fusion fuel.

4.  The apparatus for generating recoilless nonthermal nuclear fusion energy as claimed in claim 2 or 3, further comprising cooling means (10) and heat insulating means (8) surrounding both of the anode (1) and the cathode (2), and means (11) for utilizing heat obtained from the cooling means (10).

5.  The apparatus for generating recoilless nonthermal nuclear fusion energy as claimed in claim 2 ,3 or 4, further comprising a high temperature source loop having a circulating pump (202), a pipe (201) connected to a device for adding additionally liquid lithium for taking out of heat generated by the nuclear fusion reaction from a coolant or liquid lithium, and means for separating and collecting deuterium, vapor lithium and produced helium; a low temperature source loop having pipes (206), a circulating pump (207) and a cooler (208); and a thermoelectric energy generating system having a thermoelectric converter connected to external load for taking out of an electric power by inserting thermoelectric transucer materials (205) between the high temperature source loop and the low temperature source.

6.  The apparatus for generating recoilless nonthermal nuclear fusion energy as claimed in claim 5, further comprising a heat exchanger (015) provided between a liquid lithium system (02) and a water / vapor system (08) in order to utilize heat from the high temperature source loop for driving a turbine (07).

7.  The apparatus for generating recoilless nonthermal nuclear fusion energy as claimed in claim 5, further comprising an independent heat transfer system (018) inserted between the liquid lithium system (02) and the water / vapor system (08) in order to utilize heat from the high temperature source loop for driving a turbine (07).

# FIG. 1

HEAVY HYDROGEN
INJECTION DEVICE  5

HELIUM COLLECTOR  6

ELECTRIC PULSE
POWER SUPPLY  4

HEAT UTILIZATION
SYSTEM  11

LITHIUM MEASURING AND
PURIFYING SYSTEM  15

## FIG. 2

## FIG. 3

# FIG. 4

ELECTRIC PULSE
POWER SUPPLY

# FIG. 5

RADIATOR ~208

207

PUMP

204

206

LOW TEMPERATURE

205

HIGH TEMPERATURE

209

7

REACTION CONTAINER

201

201

203

PUMP

202

FIG. 6